# EUROPÄISCHE PATENTSCHRIFT

(11) **EP 1 470 558 B1**
(45) Veröffentlichungstag und Bekanntmachung des Hinweises auf die Patenterteilung: **27.04.2005**
(21) Anmeldenummer: 03708008.2
(22) Anmeldetag: 24.01.2003
(51) Int. Cl.: H01G 4/005, H01G 9/058, H01G 9/048

(54) **ELEKTRODEN, DEREN HERSTELLUNG UND KONDENSATOREN MIT DIESEN ELEKTRODEN**
ELECTRODES, THE PRODUCTION THEREOF AND CONDENSERS CONTAINING SAID ELECTRODES
ELECTRODES, FABRICATION DESDITES ELECTRODES ET CONDENSATEURS POURVUS DESDITES ELECTRODES

(30) Priorität: 28.01.2002 DE 10203143
(43) Veröffentlichungstag der Anmeldung: 27.10.2004
(73) Patentinhaber: EPCOS AG, 81669 München (DE)
(72) Erfinder: MICHEL, Hartmut, 89520 Heidenheim (DE); SCHOLZ, Thomas, 89522 Heidenheim (DE); WEBER, Christoph, 89522 Heidenheim (DE)
(74) Vertreter: Epping, Hermann, Fischer
(86) Internationale Anmeldenummer: PCT/DE2003/000196
(87) Internationale Veröffentlichungsnummer: WO 2003/065390

(56) Entgegenhaltungen:
- US-A- 4 482 931
- US-A- 4 920 452

## Beschreibung

Die Elektroden einiger elektrischer Bauelemente, beispielsweise Pseudokondensatoren und elektrochemischer Doppelschichtkondensatoren, weisen als Elektrodenmaterial aktivierten Kohlenstoff, Metalloxide wie beispielsweise Ruthenium- , Nickel- und Manganoxide oder leitfähige Polymere wie z. B. Polythiophene, Polyaniline oder Polypyrrole auf. Dabei wird das Elektrodenmaterial häufig in Pulverform auf elektrisch gut leitende Stromkollektoren aufgebracht bzw. auf diesen durch chemische oder elektrochemische Abscheidungsprozesse erzeugt. Die elektrisch leitenden Stromkollektoren liegen häufig in Form von dünnen Metallfolien, beispielsweise Aluminiumfolien, vor. Im Falle von Aluminiumfolien wird das den elektrischen Widerstand erhöhende Aluminiumoxid auf der Oberfläche der Folie z. B. durch Ätzen entfernt, so daß anschließend die elektrisch leitende Zwischenschicht und danach das Elektrodenmaterial aufgebracht werden können. Häufig wird die Oberfläche der Aluminiumfolie durch die Erzeugung einer Oberflächentopographie, beispielsweise durch Ätzen, erhöht. Dies erhöht die Oberfläche der Elektroden und führt somit auch zu Kondensatoren von höherer Kapazität.

Zur Verbesserung der Kontaktierung zwischen dem Stromkollektor und dem Elektrodenmaterial wird auf dem Stromkollektor häufig eine elektrisch leitende Zwischenschicht, beispielsweise graphitischer Kohlenstoff, aufgebracht. Teilweise können die Partikel der Zwischenschicht auch dem Elektrodenmaterial beigemengt sein. US-A-4 920 452 offenbart einer Kondensator mit einer Aluminiumelektrode. Die Aluminiumelektrode besteht aus einem Depositum aus einer Aluminiumlegierung auf einer dielektrischen Stützschicht.

Vor allem bei elektrochemischen Doppelschichtkondensatoren für Hochleistungsanwendungen werden die Stromkollektoren und die darauf befindlichen Elektrodenmaterialien möglichst dünn ausgeführt, um eine große Fläche von parallel geschalteten Elektroden in ein vorgegebenes Kondensatorvolumen einbringen zu können. Hierdurch sinkt der volumenbezogene Kontaktierungswiderstand zwischen dem Stromkollektor und der Elektrodenschicht, was zu leistungsfähigeren Kondensatoren führt.

Bei Belastung durch den elektrischen Betrieb oder Temperaturwechsel verschlechtert sich der Kontakt zwischen der Elektrodenbeschichtung auf dem Elektrodenmaterial und dem Stromkollektor. Dies führt zum Anstieg des Serienwiderstands der Kondensatoren und damit zu höheren ohmschen Verlusten beim Betrieb dieser Kondensatoren. Ursache für den Anstieg des Serienwiderstandes sind Korrosionseffekte auf der Oberfläche des Stromkollektors und ein Ablösen der elektrisch leitenden Zwischenschicht von der Oberfläche des Stromkollektors.

Ziel der vorliegenden Erfindung ist es daher, eine Elektrode zur Verfügung zu stellen, die keinen Anstieg des Serienwiderstandes während des Betriebs des elektrischen Bauteils aufweist.

Diese Aufgabe wird mit einer Elektrode nach Anspruch 1 gelöst. Vorteilhafte Ausgestaltungen der Elektrode sowie Verfahren zu ihrer Herstellung sind Gegenstand weiterer Ansprüche.

Eine erfindungsgemäße Elektrode besitzt einen flächig ausgeformten, elektrisch leitenden Stromkollektor, der Durchbrechungen aufweist. Jede Durchbrechung führt dabei jeweils durch die zwei sich gegenüberliegenden Hauptoberflächen des Stromkollektors und stellt somit ein durchgehendes Loch im Stromkollektor dar. Auf zumindest einer Hauptoberfläche des Stromkollektors und in dessen Durchbrechungen ist formschlüssig mit dem Stromkollektor eine erste Elektrodenschicht angeordnet und mit dem Stromkollektor fest verbunden. Die Elektrodenschicht kann dabei die Durchbrechungen überdecken und in diesen angeordnet sein, wobei auch die Ränder der Durchbrechungen zwischen den sich gegenüberliegenden Hauptoberflächen von der Elektrodenschicht bedeckt sein können. Weiterhin ist eine elektrisch leitende, korrosionsbeständige Zwischenschicht, die zwischen dem Stromkollektor und der Elektrodenschicht formschlüssig angeordnet ist, vorhanden, wobei die Zwischenschicht Materialien umfaßt, die ausgewählt sind aus: Edelmetallen, graphitischem Kohlenstoff, Metallnitriden und Metallcarbiden.

Die elektrisch leitende, korrosionsbeständige Zwischenschicht, die zwischen dem Stromkollektor und den Elektrodenschichten formschlüssig angeordnet ist, dient zur Verbesserung der Kontaktierung zwischen dem Stromkollektor und der ersten sowie der eventuell vorhandenen zweiten Elektrodenschicht. Diese Zwischenschicht befindet sich dann auf dem Stromkollektor und in dessen Durchbrechungen, wobei auf der Zwischenschicht dann die Elektrodenschichten angeordnet sind.

Weiterhin ist es möglich, daß die Zwischenschicht durchgehend auf dem Stromkollektor angeordnet ist, also die Hauptoberflächen des Stromkollektor komplett bedeckt. In diesem Falle ist eine besonders gute Kontaktierung zwischen Stromkollektor und den Elektrodenschichten möglich.

Aufgrund der Durchbrechungen im Stromkollektor und der Formschlüssigkeit kann die erste Elektrodenschicht gut haftend auf dem Stromkollektor angebracht werden. Die Durchbrechungen führen dabei zu einer besonders engen "Verzahnung" zwischen dem Stromkollektor und der auf ihm befindlichen Elektrodenschicht. Aufgrund dieses engen Kontakts zwischen dem Stromkollektor und der ersten Elektrodenschicht weisen erfindungsgemäße Elektroden eine besondere Stabilität während des elektrischen Betriebs, beispielsweise in Kondensatoren auf. Bei erfindungsgemäßen Elektroden treten die oben genannten Korrosionseffekte und das Ablösen der Zwischenschicht von der Oberfläche des Stromkollektors nicht in dem Maße auf wie bei herkömmlichen Elektroden.

In einer vorteilhaften Ausgestaltung der erfindungsgemäßen Elektrode wird eine zweite Elektrodenschicht auf der anderen Hauptoberfläche des Stromkollektors angeordnet. Bei dieser vorteilhaften Ausgestaltung der erfindungsgemäßen Elektrode können sich die erste und zweite Elektrodenschicht, die auf den beiden sich gegenüberliegenden Hauptoberflächen des Stromkollektors angeordnet sind, in den Durchbrechungen des Stromkollektors verbinden, so daß eine besonders gute Haftung der Elektrodenschichten auf dem Stromkollektor resultiert. Deshalb kann bei dieser Variante der erfindungsgemäßen Elektrode ein Ablösen der beiden Elektrodenschichten und damit die oben erwähnten Korrosionseffekte beim elektrischen Betrieb besonders gut verhindert werden. Dabei ist es möglich, daß die erste und zweite Elektrodenschicht aus dem gleichen Material ausgebildet sein können.

Bei der Serienschaltung von Elektroden, beispielsweise der Kondensatoren in einer Kondensatorbatterie kann es vorteilhaft sein, eine erste und eine zweite Elektrodenschicht einzusetzen, die aus unterschiedlichen Materialien ausgebildet sind. Dadurch wird es besonders vorteilhaft möglich, in einer Kondensatorbatterie einzelne Kondensatoren zu erzeugen, die aufgrund ihrer unterschiedlichen Elektrodenschichten unterschiedliche elektrische Eigenschaften aufweisen.

Der Stromkollektor kann eine gestanzte und gestreckte Aluminiumfolie umfassen. Dabei ist es möglich, daß die Durchbrechungen z. B. in Form von Löchern oder Schlitzen in den Stromkollektor gestanzt werden und dieser dann durch Streckziehen gestreckt wird. Das Streckziehen erhöht dabei vorteilhafterweise auch die flächige Ausdehnung des Stromkollektors. Besteht der Stromkollektor aus einer Metallfolie, so können die Durchbrechungen bei einem erfindungsgemäßen Stromkollektor zwischen 25 bis 70 Prozent Flächenanteil der Projektionsfläche der Metallfolie ausmachen.

Weiterhin ist es möglich, daß der Stromkollektor ein Netz aus Metalldrähten umfaßt, das z. B. aus Aluminium-, Nickel- oder rostfreien Edelstahldrähten gewoben wird. In diesem Falle sind die Maschen im Netz die Durchbrechungen. Die Durchbrechungen vergrößern gleichzeitig die Kontaktfläche zwischen Kollektor und Elektrodenschicht, so daß besonders vorteilhafte leistungsfähige Kondensatoren mit niedrigen Serienwiderstandswerten resultieren. Die enge Kontaktierung zwischen dem Stromkollektor und der eventuell vorhandenen Zwischenschicht und den Elektrodenschichten, vor allem in den Durchbrechungen, erhöht gleichzeitig die Langzeitstabilität der Elektroden.

Als Stromkollektoren mit Durchbrechungen lassen sich auch Schaummetalle einsetzen. Diese Metalle wurden durch Gasentwicklung in der Schmelze aufgeschäumt und porös gemacht. Die Gase bilden im Metall Blasen, die nach dessen Auskühlen und Aushärten Hohlräume im Metallschaum bilden. Die Wände dieser Hohlräume weisen im Vergleich zu den Bereichen des Schaummetalls, in denen keine Hohlräume vorhanden sind, nur sehr geringe Wandstärken auf. Durch selektives Ätzen dieser Bereiche des Schaummetalls, z. B. mit Säuren oder Basen, lassen sich die Hohlräume beidseitig öffnen, so daß durchgehende Öffnungen, die Durchbrechungen, erzeugt werden können. Als Metall läßt sich beispielsweise Aluminium und/oder Nickel einsetzen.

Die Zwischenschicht kann Edelmetalle wie Gold und Silber aber auch anorganische korrosionsbeständige Materialien z.B. Kohlenstoff beispielsweise in Form von Graphit, sowie Metallnitride und -carbide, beispielsweise TiN, TiC, Wolframnitride, und Wolframcarbide umfassen. Weiterhin können elektrisch leitfähige Polymere verwendet werden. Möglich ist es auch, das als Zwischenschicht verwendete Material dem eigentlichen Elektrodenmaterial beizumischen, so daß eine besonders gute Kontaktierung möglich wird.

Die erste und/oder zweite Elektrodenschicht kann leitfähige Polymere, beispielsweise Polythiophene, Polyaniline oder Polypyrrole oder auch aktivierten Kohlenstoff umfassen. Diese Materialien erlauben eine enge Verzahnung zwischen dem Stromkollektor und den Elektrodenschichten, so daß dabei keine Zwischenschicht zur Verbesserung der Kontaktierung erforderlich ist. Weiterhin ist es möglich, daß die erste und/oder zweite Elektrodenschicht Metalloxide, beispielsweise die bereits genannten Ruthenium- , Nickel- oder Manganoxide umfaßt.

Weiterhin ist ein elektrochemischer Doppelschichtkondensator Gegenstand der Erfindung. Er umfasst die erfindungsgemäßen Elektroden, die einander gegenüber stehen, wobei zwischen den Elektroden ein poröser Separator angeordnet ist. Der Separator und die Elektroden sind mit einem Elektrolyten imprägniert. Als Elektrodenmaterial verwendet man hierbei bevorzugt Kohlenstoff, beispielsweise in Form von Aktivkohlenstoff oder Graphit.

Vorteilhaft sind erfindungsgemäße Elektroden auch in Hybridkondensatoren, wobei in diesem Fall eine erste erfindungsgemäße Elektrode Kohlenstoff umfaßt und einer zweiten erfindungsgemäßen Elektrode gegenübersteht, die Metalloxide und/oder elektrisch leitfähige Polymere umfaßt. Zwischen den Elektroden ist wieder ein poröser Separator angeordnet, wobei die Elektroden und der Separator mit einem Elektrolyten imprägniert sind. Erfindungsgemäße Elektroden lassen sich auch in Pseukondensatoren verwenden, die zwei Elektroden aufweisen, die entweder nur elektrisch leitfähige Polymere oder Metalloxide umfassen

Als Separatoren können vorteilhafterweise poröse Polymerfilme, Vliese, Filze oder Gewebe aus Polymeren oder Fiberglas oder auch Papiere verwendet werden.

Aufgrund der erfindungsgemäßen Elektroden weisen sowohl die elektrochemischen Doppelschicht-Kondensatoren als auch die Pseudokondensatoren einen verbesserten dauerhaften Serienwiderstand während des Betriebs auf.

Ein Verfahren zur Herstellung einer erfindungsgemäßen Elektrode besteht in seiner allgemeinsten Ausformung aus zwei Verfahrensschritten. In einem Verfahrensschritt A) wird ein flächig ausgeformter Stromkollektor, der Durchbrechungen aufweist, erzeugt. In einem daran anschließenden Verfahrensschritt B1) wird danach eine elektrisch leitende, korrosionsbeständige Zwischenschicht, die Materialien umfaßt, die ausgewählt sind aus:
- Edelmetallen, graphitischem Kohlenstoff, Metallnitriden und Metallcarbide auf dem Stromkollektor erzeugt. Anschließend wird in einem Verfahrensschritt B) auf zumindest einer Hauptoberfläche des Stromkollektors eine Elektrodenschicht so erzeugt, daß sie formschlüssig und fest mit dem Stromkollektor verbunden ist.

In einer vorteilhaften Ausgestaltung des erfindungsgemäßen Verfahrens kann im Verfahrensschritt B) die Elektrodenschicht auch auf beiden Hauptoberflächen des Stromkollektors erzeugt werden.

Zur Herstellung des Stromkollektors im Verfahrensschritt A) ist es möglich, daß durchgehende Löcher beispielsweise in eine Metallfolie gestanzt werden und weiterhin die Metallfolie durch Streckziehen behandelt wird. Beim Streckziehen fließt die Metallfolie vorwiegend aus ihrer Dicke, wobei sich die Oberfläche der Metallfolie gegenüber dem Zustand vor dem Streckziehen vergrößert. Das Verfahren des Streckziehens ist einem Fachmann geläufig und wird in der Regel dadurch ausgeführt, daß die Metallfolie in ein Spannwerkzeug gelegt und dann gespannt wird. Während der starken Streckbeanspruchung beginnt die Metallfolie unter Verringerung ihrer Dicke zu fließen. Weiterhin ist es möglich, die Metallfolie zu schlitzen und anschließend dem Streckziehen auszusetzen, so daß die durchgehenden Löcher (Durchbrechungen) erst während des Streckziehens gebildet werden. In der Regel beträgt die Dicke der gestreckten Metallfolie zwischen 20 und 100 Mikrometer, wobei etwa 25 bis 70 Prozent des Flächenanteils der ursprünglichen unbehandelten Metallfolie durch die Erzeugung der Durchbrechungen entfernt wurden, so daß die durchgehenden Löcher gebildet wurden.

Die durchgehenden Löcher in der Metallfolie können auch mittels kontaktloser Verfahren gebildet werden, z.B. dadurch, daß ein Laser die Löcher in die Metallfolie brennt. Anschließend kann dann mittels des oben beschriebenen Streckziehens die Oberfläche der Metallfolie vergrößert werden.

Weiterhin ist es möglich, den Stromkollektor durch Weben von Metalldrähten zu einem Metallnetz herzustellen. Dabei werden die durchgehenden Löcher von den Zwischenräumen des Metallnetzes gebildet. Vorteilhafterweise werden Aluminium-, Nikkel- oder rostfreie Edelstahldrähte eingesetzt.

Wird als Metallfolie für den Stromkollektor eine Aluminiumfolie verwendet, so ist es vorteilhaft, vor den Verfahrensschritten B1) und B) in einem separaten Verfahrensschritt A1) Oberflächenschichten der Folie zur Verbesserung der Leitfähigkeit des Stromkollektors zu entfernen. Im Falle von Aluminiumfolie liegt häufig eine schlecht leitende Aluminiumoxidoberflächenschicht vor, die abgebeizt werden kann. Dies kann entweder durch chemische, galvanische Verfahrensschritte oder durch Plasmaätzen erfolgen, die alle einem Fachmann geläufig sind.

Im Verfahrensschritt B1) kann die elektrisch leitende Zwischenschicht, beispielsweise in Form einer Metallschicht, mittels eines galvanischen Verfahrens oder durch Chemical Vapour Deposition (CVD) oder Physical Vapour Deposition (PVD) Verfahren erzeugt werden. Bei der Chemical Vapour Deposition werden häufig Metalle oder Kohlenstoff aus der Gasphase abgeschieden. Die Physical Vapour Deposition erfolgt in der Regel durch ein Aufbringen von ionisierten Teilchen in einem elektrischen Feld. Weiterhin ist es möglich, im Verfahrensschritt B1) eine Kohlenstoffschicht, z. B. aus graphitischem Kohlenstoff als elektrisch leitende Zwischenschicht, durch Tauchbeschichtung in einem Kohlenstoffbad zu erzeugen. Dazu wird der Stromkollektor in ein Tauchbad eingebracht, das graphitischen Kohlenstoff mit wäßrigen oder organischen Lösungsmitteln, beispielsweise Alkoholen enthält, die dann verdampft werden können. Wird die Zwischenschicht in Form einer Metallschicht ausgeführt, so ist es vorteilhaft, besonders korrosionshemmende Metalle, beispielsweise Edelmetalle wie Gold, Silber, zu verwenden.

Im Verfahrensschritt B) kann dann anschließend die Elektrodenschicht durch Aufrakeln einer flüssigen oder viskosen Phase, die ein Elektrodenmaterial enthält, erzeugt werden. Weiterhin ist es möglich, zuerst die flüssige oder viskose Phase, die das Elektrodenmaterial enthält, auf eine Trägerfolie, beispielsweise eine Polytetrafluorethylenfolie aufzubringen und dann zu trocknen. Anschließend kann dann das Elektrodenmaterial von der Trägerfolie auf dem Stromkollektor übertragen werden, so daß die Elektrodenschicht gebildet wird. So ist es beispielsweise möglich, daß das auf der Trägerfolie befindliche Elektrodenmaterial durch Auflaminieren auf den Stromkollektor übertragen wird. Während dieses Laminationsprozesses verbindet sich die aufzubringende Elektrodenschicht besonders eng und formschlüssig mit dem Stromkollektor sowie dessen Durchbrechungen. Werden auf beiden Hauptoberflächen des Stromkollektors Elektrodenschichten erzeugt, so können sich diese, wie bereits erwähnt, in den Durchbrechungen miteinander verbinden, so daß der Stromkollektor besonders gut haftend umschlossen wird. Während des Aufbringens der Elektrodenschicht schmilzt die Trägerfolie nicht. Vielmehr kann sie nach dem Übertrag der Elektrodenschicht auf den Stromkollektor abgezogen werden. Vorteilhafterweise kann das Elektrodenmaterial mit einem Binder vermischt auf die Trägerfolie aufgebracht werden. In diesem Fall erfolgt der Übertrag des Elektrodenmaterials auf den Stromkollektor durch Aufschmelzen des Binders. Als Binder läßt sich beispielsweise Polypropylenpulver einsetzen.

Im Folgenden soll die Erfindung anhand von Ausführungsbeispielen und von Figuren näher erläutert werden.
- Die Figuren 1 und 2: zeigen die Herstellung des Stromkollektors mit den Durchbrechungen im Verfahrensschritt A).
- Figur 3: zeigt das Aufbringen der Elektrodenmasse mittels Reverse Roller Coating im Verfahrensschritt B).
- Figur 4: zeigt das Aufbringen der Elektrodenmasse mittels Auflaminieren mit Hilfe einer Trägerfolie.
- Figur 5: zeigt eine fertige Elektrode mit einem vergrößerten Ausschnitt der Schnittkante.

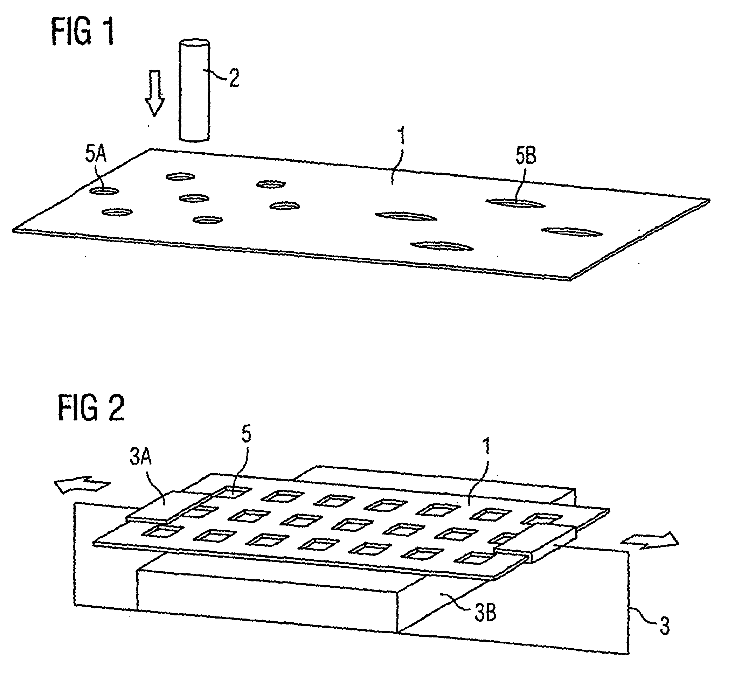

In Figur 1 ist zu sehen, wie im Verfahrensschritt A) in dem Stromkollektor 1, der hier als Metallfolie dargestellt ist, Durchbrechungen erzeugt werden. Diese können mittels eines Stanzwerkzeuges 2 in Form von durchgehenden Löchern 5A in der Metallfolie erzeugt werden oder es können Durchbrechungen in Form von Schlitzen 5B erzeugt werden. Aus Platzgründen sind die beiden alternativen Ausformungen der Durchbrechungen in einem Bild gezeigt.

In Figur 2 ist gezeigt, wie im Verfahrensschritt A) der Stromkollektor 1 in Form einer Metallfolie nach dem Erzeugen der Durchbrechungen 5 mittels Streckziehens gestreckt wird. Dazu kann der Stromkollektor in eine Streckziehpresse 3 eingespannt werden, die beispielsweise aus Zangen 3A und einem Strecktisch 3B besteht. Durch Auseinanderziehen der Zangen kann dann der gestreckte Stromkollektor erhalten werden, wobei es auch möglich ist, daß die Schlitze 5B mit Hilfe des Streckziehens erweitert werden. Gleichzeitig erhöht das Streckziehen auch vorteilhafterweise die Oberfläche des Stromkollektors. Die Pfeile zeigen schematisch die Richtung des Streckziehens an.

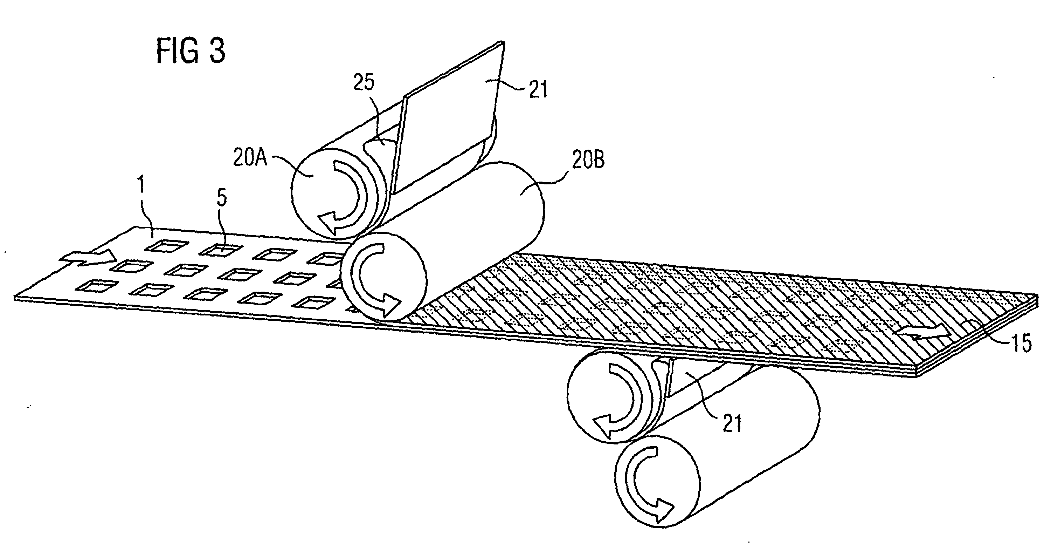

In Figur 3 ist der Verfahrensschritt B) des erfindungsgemäßen Verfahrens gezeigt, bei dem mittels Reverse Roller Coating die Elektrodenmasse 25, die in einer flüssigen oder viskosen Phase vorhanden sein kann, auf den Stromkollektor 1 übertragen wird. Beim Reverse Roller Coating wird das Elektrodenmaterial 25, mit Hilfe einer Klinge 21 auf der Rolle 20A vergleichmäßigt und auf die Rolle 20B übertragen. Diese Rolle überträgt dann das Elektrodenmaterial gleichmäßig auf den Stromkollektor 1. Möglich ist auch ein Übertrag des Elektrodenmaterials auf den Stromkollektor mittels Rakelverfahren. Dabei ist es möglich, daß nur eine Hauptoberfläche des Stromkollektors oder, wie in dem Bild gezeigt, beide Hauptoberflächen mit dem Elektrodenmaterial bedeckt werden.

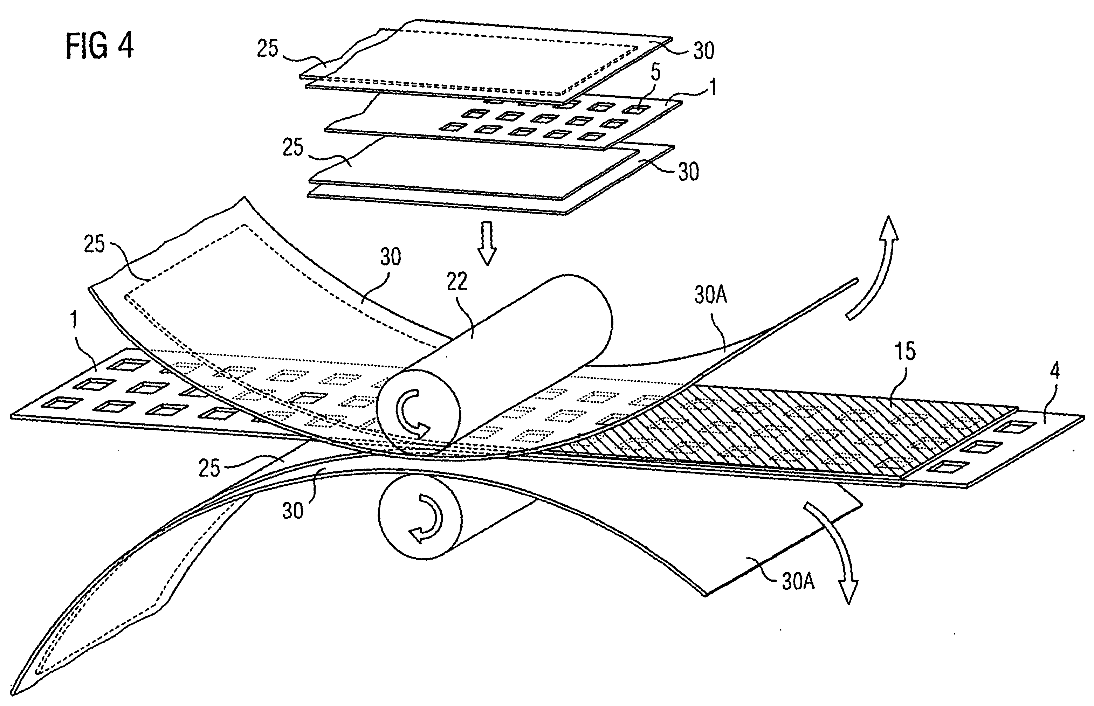

In Figur 4 ist gezeigt, wie die Elekrodenschicht 15 mittels eines alternativen Verfahrens, dem Laminieren, mit Hilfe einer Trägerfolie 30 auf dem Stromkollektor 1 erzeugt werden kann. Dazu wird das Elektrodenmaterial 25 zuerst auf die Trägerfolie 30 aufgebracht und danach getrocknet. Danach wird die Trägerfolie so mit dem Stromkollektor in Kontakt gebracht, daß das darauf befindliche Elektrodenmaterial 25 direkt den Stromkollektor kontaktiert. Danach kann das Elektrodenmaterial von der Trägerfolie 30 auf den Stromkollektor dadurch übertragen werden, daß heiße Laminierrollen 22 über der Trägerfolie abgerollt werden, so daß sich das Elektrodenmaterial eng mit dem Stromkollektor verbindet. Dabei sorgen die Durchbrechungen 5 im Stromkollektor für eine besonders innige und formschlüssige Aufbringung des Elektrodenmaterials. Werden, wie in Figur 4 gezeigt, auf beiden Hauptoberflächen des Stromkollektors Elektrodenschichten erzeugt, so können sich diese in den Durchbrechungen 5 des Stromkollektors direkt berühren und diesen besonders eng und formschlüssig umschließen. Nach dem Laminieren kann die nun abgelöste Trägerfolie 30A abgezogen werden. Zur Kontaktierung der Elektroden ist es möglich, einen Bereich 4 des Stromkollektors von dem Elektrodenmaterial freizulassen, so daß mittels dieses Kontaktierungsbereichs 4 später im fertigen elektrischen Bauelement elektrische Anschlüsse angeschlossen werden können.

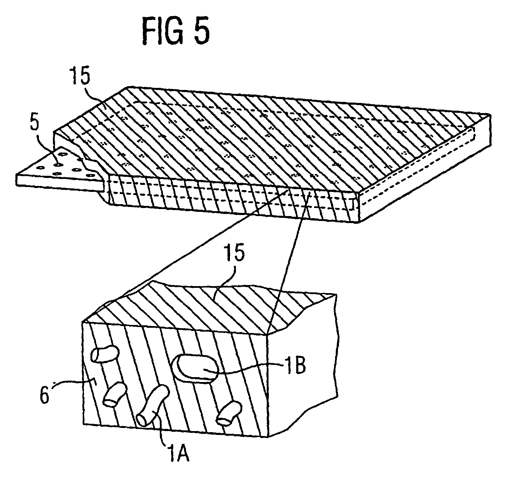

In Figur 5 ist eine fertige Elektrode mit Durchbrechungen 5 und der Elektrodenschicht 15 zu sehen. Ein vergrößerter Ausschnitt von einer Schnittkante 6 zeigt, daß auf der Schnittkante nach wie vor Teile des Stromkollektors zu sehen sind, die nicht von der Elektrodenschicht bedeckt sind. Ist der Stromkollektor ein Netz aus Metalldrähten, so ist es beispielsweise möglich, daß einzelne Drähte 1A aus der Elektrodenschicht hervorstehen oder daß darüber hinaus sowohl im Falle von Stromkollektoren als Netzen, Metallfolien oder Metallschäumen Bereiche 1B nicht von der Elektrodenschicht 15 bedeckt werden. Diese Bereiche können zur späteren Kontaktierung eines elektrischen Anschlusses verwendet werden.

In einem Ausführungsbeispiel wird ein Aluminiumstreckmetall mit Durchbrechungen, das 30 bis 50 Mikrometer Dicke aufweist, zunächst mit einem Wasserstoffplasma behandelt, so daß störendes Oberflächenoxid entfernt werden kann (Verfahrenschritt A1). Auf diesen Stromkollektor kann dann in einem anschließenden Sputterprozeß (Verfahrensschritt B1) beispielsweise beidseitig eine Kupferschicht oder Kohlenstoffschicht als Zwischenschicht aufgebracht werden. Möglich ist es auch, im Verfahrensschritt A) den Stromkollektor in Form eines Aluminiumstreckmetalls in eine das Oberflächenoxid ätzende Lösung zu tauchen und in demselben Bad oder einem sich direkt daran anschließenden Bad eine Zwischenschicht aus Kohlenstoff, beispielsweise graphitischem Kohlenstoff, aufzubringen. Sowohl die Kupferschicht als auch die Kohlenstoffschicht als Zwischenschichten sind elektrisch gut leitend und werden durch Sauerstoff bei weiteren Prozeßschritten nicht angegriffen, so daß sie korrosionsbeständig sind. Im Verfahrensschritt B) wird zunächst das Elektrodenmaterial in Form von aktiviertem Kohlenstoffpulver als eine ca. 70 Mikrometer dicke Schicht zusammen mit einem Binder, beispielsweise Polypropylenpulver, Polytetrafluorethylen oder Polyvinyldifluorid und einem Lösungsmittel, beispielsweise Aceton, Heptan, Tetrahydrofuran oder Wasser, auf eine Polytetrafluorethylenfolie als Trägerfolie aufgerakelt. Nach dem Verdampfen des Lösungsmittels werden dann diese vorbereiteten Schichten beidseitig auf den Stromkollektor aufgewalzt (laminiert). Die Laminierwalzen sind auf ca. 170° C aufgeheizt. Dadurch schmilzt der Binder, so daß das Elektrodenmaterial 25 unter Bildung der Elektrodenschicht 15 auf den Stromkollektor 1 übertragen wird und eine homogene Beschichtung des Kollektors erzeugt wird. In diesem Fall ist das eigentliche Elektrodenmaterial, das aktivierte Kohlenstoffpulver, in eine Matrix aus Binder (Polypropylen) eingelagert, so daß die Elektrodenschicht gebildet wird.

Die erfindungsgemäßen Elektroden bzw. das Verfahren zu deren Herstellung beschränkt sich nicht auf das hier dargestellte Ausführungsbeispiel. Variationen sind vor allem bezüglich der verwendeten Elektrodenmaterialien, der Materialien für die Stromkollektorfolie und der Ausformungen der Durchbrechungen in der Stromkollektorfolie möglich.

## Patentansprüche

1. Elektrode
- mit einem flächig ausgeformten, elektrisch leitenden, Durchbrechungen (5) aufweisenden Stromkollektor (1),
- mit einer ersten Elektrodenschicht (15), die auf einer Hauptoberfläche des Stromkollektors und in dessen Durchbrechungen formschlüssig mit dem Stromkollektor angeordnet und mit diesem fest verbunden ist,
- mit einer elektrisch leitenden, korrosionsbeständigen Zwischenschicht (10), die zwischen dem Stromkollektor und der Elektrodenschicht formschlüssig angeordnet ist, wobei die Zwischenschicht Materialien umfaßt, die ausgewählt sind aus:
- Edelmetallen, graphitischem Kohlenstoff, Metallnitriden und Metallcarbiden.

2. Elektrode nach dem vorhergehenden Anspruch,
- bei der eine zweite Elektrodenschicht auf der anderen Hauptoberfläche des Stromkollektors angeordnet ist.

3. Elektrode nach dem vorhergehenden Anspruch,
- bei der die erste und zweite Elektrodenschicht aus dem gleichen Material ausgebildet sind.

4. Elektrode nach einem der vorherigen Ansprüche,
- bei der die Zwischenschicht durchgehend auf dem Stromkollektor angeordnet ist.

5. Elektrode nach einem der vorherigen Ansprüche,
- bei der der Stromkollektor eine mit Durchbrechungen versehene und gestreckte Aluminiumfolie umfaßt.

6. Elektrode nach einem der Ansprüche 1 bis 4,
- bei der der Stromkollektor ein Netz aus Metalldrähten umfaßt.

7. Elektrode nach einem der Ansprüche 1 bis 4,
- bei der der Stromkollektor ein geätztes Schaummetall umfaßt.

8. Elektrode nach einem der vorherigen Ansprüche,
- bei der die erste und/oder zweite Elektrodenschicht leitfähige Polymere umfassen.

9. Elektrode nach einem der Ansprüche 1 bis 7,
- mit einer ersten und/oder zweiten Elektrodenschicht, die aktivierten Kohlenstoff umfaßt.

10. Elektrode nach einem der Ansprüche 1 bis 7,
- bei der die erste und/oder zweite Elektrodenschicht Metalloxide umfaßt.

11. Verfahren zur Herstellung einer Elektrode mit den Verfahrensschritten:
A) ein flächig ausgeformter Stromkollektor (1), der Durchbrechungen (5) aufweist, wird erzeugt,
B1) eine elektrisch leitende, korrosionsbeständige Zwischenschicht (10), die Materialien umfaßt, die ausgewählt sind aus:
- Edelmetallen, graphitischem Kohlenstoff, Metallnitriden und Metallcarbiden wird danach auf dem Stromkollektor erzeugt,
B) danach wird auf zumindest einer Hauptoberfläche des Stromkollektors über der Zwischenschicht eine Elektrodenschicht (15) so erzeugt, daß sie formschlüssig und fest mit dem Stromkollektor verbunden ist.

12. Verfahren nach dem vorhergehenden Anspruch,
- bei dem im Verfahrensschritt B) die Elektrodenschicht auf beiden Hauptoberflächen des Stromkollektors erzeugt wird.

13. Verfahren nach einem der Ansprüche 11 bis 12,
- bei dem im Verfahrensschritt A) der Stromkollektor durch Stanzen von Durchbrechungen in eine Metallfolie und Streckziehen dieser Folie hergestellt wird.

14. Verfahren nach dem vorherigen Anspruch,
- bei dem als Metallfolie eine Aluminiumfolie verwendet wird,
- bei dem in einem Verfahrenschritt A1) Oberflächenschichten der Folie zur Verbesserung der Leitfähigkeit der Folie vor den Verfahrensschritten B1) und/oder B) entfernt werden.

15. Verfahren nach einem der Ansprüche 11 bis 12,
- bei dem im Verfahrenschritt A) der Stromkollektor durch Weben von Metalldrähten zu einem Metallnetz hergestellt wird.

16. Verfahren nach einem der Ansprüche 11 bis 15,
- bei dem im Verfahrensschritt B1) die elektrisch leitende Zwischenschicht in Form einer Metallschicht mittels eines galvanischen Verfahrens oder durch CVD- oder PVD-Verfahren erzeugt wird.

17. Verfahren nach einem der Ansprüche 11 bis 15,
- bei dem im Verfahrensschritt B1) eine Kohlenstoffschicht als elektrisch leitende Zwischenschicht durch Tauchbeschichtung des Stromkollektors (1) in einem Kohlenstoffbad erzeugt wird.

18. Verfahren nach einem der Ansprüche 11 bis 17,
- bei dem im Verfahrensschritt B) die Elektrodenschicht durch Aufrakeln einer flüssigen oder viskosen Phase, die das Elektrodenmaterial (25) enthält, erzeugt wird.

19. Verfahren nach einem der Ansprüche 11 bis 17,
- bei dem im Verfahrensschritt B) zuerst die flüssige oder viskose Phase, die das Elektrodenmaterial (25) enthält, auf eine Trägerfolie (30) aufgebracht und getrocknet wird,
- bei dem danach das Elektrodenmaterial (25) von der Trägerfolie (30) auf den Stromkollektor (1) übertragen wird, so daß die Elektrodenschicht über der Zwischenschicht gebildet wird.

20. Verfahren nach dem vorherigen Anspruch,
- bei dem das Elektrodenmaterial mit einem Binder vermischt auf die Trägerfolie aufgebracht wird,
- bei dem das Elektrodenmaterial durch Aufschmelzen des Binders von der Trägerfolie auf den Stromkollektor übertragen wird.

21. Verfahren nach einem der Ansprüche 11 bis 20,
- bei dem als Elektrodenmaterial Aktivkohle, Metalloxide oder leitfähige Polymere verwendet werden.

22. Elektrochemischer Doppelschichtkondensator,
- mit Elektroden nach einem der Ansprüche 1 bis 7 oder 9, die Aktivkohlenstoff und/oder graphitischen Kohlenstoff umfassen,
- bei dem zwischen den Elektroden ein poröser Separator angeordnet ist,
- wobei die Elektroden und der Separator mit einem Elektrolyten imprägniert sind.

23. Hybridkondensator,
- mit einer ersten und einer zweiten Elektrode nach einem der Ansprüche 1 bis 10, wobei die erste Elektrode Aktivkohlenstoff und/oder graphitischen Kohlenstoff und die zweite Elektrode elektrisch leitfähige Polymere und/oder Metalloxide umfaßt,
- bei dem zwischen der ersten und zweiten Elektrode ein poröser Separator angeordnet ist,
- wobei die Elektroden und der Separator mit einem Elektrolyten imprägniert sind.

24. Pseudokondensator,
- mit einer ersten und einer zweiten Elektrode nach einem der Ansprüche 1 bis 10, wobei beide Elektroden entweder Metalloxide oder leitfähige Polymere umfassen,
- bei dem zwischen der ersten und zweiten Elektrode ein poröser Separator angeordnet ist,
- wobei die Elektroden und der Separator mit einem Elektrolyten imprägniert sind.

## Claims

1. Electrode
- with a two-dimensionally shaped, electrically conducting current collector (1) having apertures (5),
- with a first electrode layer (15), which is arranged on a main surface of the current collector and in its apertures in interlocking engagement with the current collector and is solidly bonded with the latter,
- with an electrically' conducting, corrosion-resistant intermediate layer (10), which is arranged in interlocking engagement between the current collector and the electrode layer, the intermediate layer comprising materials which are selected from:
- precious metals, graphitic carbon, metal nitrides and metal carbides.

2. Electrode according to the preceding claim,
- in which a second electrode layer is arranged on the other main surface of the current collector.

3. Electrode according to the preceding claim,
- in which the first and second electrode layers are formed from the same material.

4. Electrode according to one of the preceding claims,
- in which the intermediate layer is arranged over the whole of the current collector.

5. Electrode according to one of the preceding claims,
- in which the current collector comprises an aluminium foil 1 which is provided with apertures and stretched.

6. Electrode according to one of Claims 1 to 4,
- in which the current collector comprises a gauze of metal wires.

7. Electrode according to one of Claims 1 to 4,
- in which the current collector comprises an etched foam metal.

8. Electrode according to one of the preceding claims,
- in which the first and/or second electrode layer comprises conductive polymers.

9. Electrode according to one of Claims 1 to 7,
- with a first and/or second electrode layer, which comprises activated carbon.

10. Electrode according to one of Claims 1 to 7,
- in which the first and/or second electrode layer comprises metal oxides.

11. Method for producing an electrode with the method steps of:
A) a two-dimensionally shaped current collector (1) which has apertures (5) is produced,
B1) an electrically conducting, corrosion-resistant intermediate layer (10), which comprises materials which are selected from:
- precious metals, graphitic carbon, metal nitrides and metal carbides, is then produced on the current collector,
B) after that, an electrode layer (15) is produced on at least one main surface of the current collector over the intermediate layer in such a way that it is in interlocking engagement and solidly bonded with the current collector.

12. Method according to the preceding claim,
- in which, in method step B), the electrode layer is produced on both main surfaces of the current collector.

13. Method according to either of Claims 11 and 12,
- in which, in method step A), the current collector is produced by punching apertures into a metal foil and stretch-forming this foil.

14. Method according to the preceding claim,
- in which an aluminium foil is used as the metal foil,
- in which, in a method step A1), surface layers of the foil are removed to improve the conductivity of the foil before method steps B1) and/or B).

15. Method according to either of Claims 11 and 12,
- in which, in method step A), the current collector is produced by weaving metal wires into a metal gauze.

16. Method according to one of Claims 11 to 15,
- in which, in method step B1), the electrically conducting intermediate layer is produced in the form of a metal layer by means of a galvanic method or by CVD or PVD methods.

17. Method according to one of Claims 11 to 15,
- in which, in method step B1), a carbon layer is produced as an electrically conducting intermediate layer by immersion coating of the current collector (1) in a carbon bath.

18. Method according to one of Claims 11 to 17,
- in which, in method step B), the electrode layer is produced by knife-coating a liquid or viscous phase which contains the electrode material (25).

19. Method according to one of Claims 11 to 17,
- in which, in method step B), first the liquid or viscous phase which contains the electrode material (25) is applied to a carrier film (30) and then dried,
- in which, after that, the electrode material (25) is transferred from the carrier film (30) to the current collector (1), so that the electrode layer is formed over the intermediate layer.

20. Method according to the preceding claim,
- in which the electrode material is mixed with a binder when it is applied to the carrier film,
- in which the electrode material is transferred from the carrier film to the current collector by melting the binder.

21. Method according to one of Claims 11 to 20,
- in which activated carbon, metal oxides or conductive polymers are used as the electrode material.

22. Electrochemical double-layer capacitor,
- with electrodes according to one of Claims 1 to 7 or 9, which comprise activated carbon and/or graphitic carbon,
- in which a porous separator is arranged between the electrodes,
- the electrodes and the separator being impregnated with an electrolyte.

23. Hybrid capacitor,
- with a first and a second electrode according to one of Claims 1 to 10, the first electrode comprising activated carbon and/or graphitic carbon and the second electrode comprising electrically conductive polymers and/or metal oxides,
- in which a porous separator is arranged between the first and second electrodes,
- the electrodes and the separator being impregnated with an electrolyte.

24. Pseudocapacitor,
- with a first and a second electrode according to one of Claims 1 to 10, both electrodes comprising either metal oxides or conductive polymers,
- in which a porous separator is arranged between the first and second electrodes,
- the electrodes and the separator being impregnated with an electrolyte.

## Revendications

1. Electrode
- comprenant un collecteur (1) de courant de forme plate, conducteur de l'électricité et ayant des ajours (5),
- comprenant une première couche (15) d'électrode qui est disposée à complémentarité de forme avec le collecteur de courant sur une surface principale du collecteur de courant et dans ses ajours et qui lui est reliée solidement,
- comprenant une couche (10) intermédiaire conductrice de l'électricité, résistante à la corrosion et disposée à complémentarité de forme entre le collecteur de courant et la couche d'électrodes, la couche intermédiaire comprenant des matériaux qui sont choisis parmi :
- des métaux précieux, du carbone graphitique, des nitrures métalliques et des carbures métalliques.

2. Electrode suivant la revendication précédente,
- dans laquelle une deuxième couche d'électrodes est disposée sur l'autre surface principale du collecteur de courant.

3. Electrode suivant la revendication précédentes,
- dans laquelle la première et la deuxième couche d'électrodes sont en le même matériau.

4. Electrode suivant l'une des revendications précédentes,
- dans laquelle la couche intermédiaire est disposée de manière continue sur le collecteur de courant.

5. Electrode suivant l'une des revendications précédentes,
- dans laquelle le collecteur de courant comprend un feuillard d'aluminium muni d'ajours et étiré.

6. Electrode suivant l'une des revendications 1 à 4,
- dans laquelle le collecteur de courant comprend une toile de fils métalliques.

7. Electrode suivant l'une des revendications 1 à 4,
- dans laquelle le collecteur de courant comprend un métal en mousse ayant subi une attaque.

8. Electrode suivant l'une des revendications précédentes,
- dans laquelle la première et/ou la deuxième couche d'électrodes comprennent des polymères conducteurs.

9. Electrode suivant l'une des revendications 1 à 7,
- comprenant une première et/ou une deuxième couche d'électrodes qui comprend du carbone activé.

10. Electrode suivant l'une des revendications 1 à 7,
- dans laquelle la première et/ou la deuxième couche d'électrodes comprennent des oxydes métalliques.

11. Procédé de fabrication d'une électrode contenant les stades de procédé :
A) on produit un collecteur (1) de courant de forme plate qui a des ajours (5),
B1) on produit ensuite sur le collecteur de courant une couche (10) intermédiaire conductrice de l'électricité, résistante à la corrosion et comprenant des matériaux choisis parmi :
- des métaux précieux, du carbone graphitique, du nitrure métallique et des carbures métalliques,
B) on produit ensuite sur au moins une surface principale du collecteur de courant, au-dessus de la couche intermédiaire, une couche (15) d'électrode qui est reliée par complémentarité de forme et solidement au collecteur de courant.

12. Procédé suivant la revendication précédente,
- dans lequel on produit, au stade B) du procédé, la couche d'électrodes sur deux surfaces principales du collecteur de courant.

13. Procédé suivant l'une des revendications 11 à 12,
- dans lequel, au stade A) du procédé, on produit le collecteur de courant par estampage d'ajours dans un feuillard métallique et étirage de ce feuillard.

14. Procédé suivant la revendication précédente,
- dans lequel on utilise comme feuillard métallique un feuillard d'aluminium,
- dans lequel, dans un stade A1) de procédé, on élimine des couches superficielles du feuillard pour améliorer la conductivité du feuillard avant le stade B1) et/ou B) du procédé.

15. Procédé suivant l'une des revendications 11 à 12,
- dans lequel, au stade A) du procédé, on produit le collecteur de courant par tissage de fils métalliques en une toile métallique.

16. Procédé suivant l'une des revendications 11 à 15,
- dans lequel, au stade B1) du procédé, on produit la couche intermédiaire conductrice de l'électricité sous la forme d'une couche métallique au moyen d'un procédé galvanique ou par un procédé CVD ou PVD.

17. Procédé suivant l'une des revendications 11 à 15,
- dans lequel, au stade B1) du procédé, on produit une couche de carbone en tant que couche intermédiaire conductrice de l'électricité par revêtement par immersion du collecteur (1) de courant dans un bain de carbone.

18. Procédé suivant l'une des revendications 11 à 17,
- dans lequel, au stade B) du procédé, on produit la couche d'électrodes par application à la racle d'une phase liquide ou visqueuse qui contient le matériau (25) d'électrodes.

19. Procédé suivant l'une des revendications 11 à 17,
- dans lequel, au stade B) du procédé, on dépose d'abord la phase liquide ou visqueuse qui contient le matériau (25) d'électrodes sur un feuillard (30) support et on la sèche,
- dans lequel on transfère ensuite le matériau (25) d'électrodes du feuillard (30) support au collecteur (1) de courant, de manière à former la couche d'électrodes au-dessus de la couche intermédiaire.

20. Procédé suivant la revendication précédente,
- dans lequel on dépose le matériau d'électrodes mélangé à un liant sur le feuillard support,
- dans lequel on transfère le matériau d'électrodes du feuillard support au collecteur de courant en faisant fondre le liant.

21. Procédé suivant l'une des revendications 11 à 20,
- dans lequel on utilise comme matériau d'électrodes du charbon actif, des oxydes métalliques ou des polymères conducteurs.

22. Condensateur électrochimique à double couche,
- comprenant des électrodes suivant l'une des revendications 1 à 7 ou 9 qui comprennent du carbone actif et/ou du carbone graphitique,
- dans lequel un séparateur poreux est disposé entre les électrodes,
- les électrodes et le séparateur étant imprégnés d'un électrolyte.

23. Condensateur hybride,
- comprenant une première et une deuxième électrode suivant l'une des revendications 1 à 10, la première électrode comprenant du carbone actif et/ou du carbone graphitique et la deuxième électrode des polymères conducteurs de l'électricité et/ou des oxydes métalliques,
- dans lequel un séparateur poreux est disposé entre la première et la deuxième électrode,
- les électrodes et le séparateur étant imprégnés d'un électrolyte.

24. Pseudocondensateur,
- comprenant une première et une deuxième électrode suivant l'une des revendications 1 à 10, les deux électrodes comprenant des oxydes métalliques ou des polymères conducteurs,
- dans lequel un séparateur poreux est disposé entre la première et la deuxième électrode,
- les électrodes et le séparateur étant imprégnés d'un électrolyte.
